# EUROPÄISCHE PATENTSCHRIFT

(11) **EP 4 380 908 B1**
(45) Veröffentlichungstag und Bekanntmachung des Hinweises auf die Patenterteilung: **25.03.2026**
(21) Anmeldenummer: 22761971.5
(22) Anmeldetag: 02.08.2022
(51) Int. Cl.: C04B 28/04, C04B 20/00, C04B 28/12, C04B 28/10, C04B 28/06

(54) **WERKMAUERMÖRTEL, TROCKENMÖRTELFORMKÖRPER, LAGERFUGENMÖRTELSCHICHT, MAUERWERK MIT EINER DERARTIGEN LAGERFUGENMÖRTELSCHICHT SOWIE VERFAHREN ZUR HERSTELLUNG EINER DERARTIGEN LAGERFUGENMÖRTELSCHICHT UND EINES MAUERWERKS**
FACTORY-PRODUCED MASONRY MORTAR, SHAPED DRY-MORTAR PRODUCT, JOINT MORTAR LAYER, BRICKWORK HAVING SUCH A JOINT MORTAR LAYER, AND METHOD FOR PRODUCING SUCH A JOINT MORTAR LAYER AND BRICKWORK
MORTIER DE MAÇONNERIE PRÉPARÉ EN USINE, CORPS FAÇONNÉ À BASE DE MORTIER SEC, COUCHE DE MORTIER DE JOINT D'ASSISE, OUVRAGE DE MAÇONNERIE PRÉSENTANT UNE TELLE COUCHE DE MORTIER DE JOINT D'ASSISE ET PROCÉDÉ DE FABRICATION D'UNE TELLE COUCHE DE MORTIER DE JOINT D'ASSISE ET D'UN OUVRAGE DE MAÇONNERIE

(30) Priorität: 03.08.2021 DE 102021208402
(43) Veröffentlichungstag der Anmeldung: 12.06.2024
(73) Patentinhaber: Franken Maxit Mauermörtel GmbH & Co., 95359 Kasendorf (DE)
(72) Erfinder: SCHARFE, Friedbert Anton, 95359 Kasendorf (DE); GROPPWEIS, Sebastian Stephan, 95359 Kasendorf (DE); ANDRATSCHKE, Christin, 95445 Bayreuth (DE)
(74) Vertreter: Dr. Solf & Zapf Patent- und Rechtsanwalts PartG mbB
(86) Internationale Anmeldenummer: PCT/EP2022/071741
(87) Internationale Veröffentlichungsnummer: WO 2023/012181

(56) Entgegenhaltungen:
- WO-A1-2008/151878
- WO-A1-2010/097556
- WO-A1-2018/089004
- CH-A1- 703 178
- DE-A1- 102014 109 756
- DE-A1- 19 916 117
- US-A1- 2005 241 542

## Beschreibung

Die vorliegende Erfindung betrifft einen trockenen, werksseitig angemischten, bevorzugt schüttfähigen, Mauermörtel (Werkmauermörtel) für die Herstellung einer Lagerfugenmörtelschicht eines Mauerwerks, eine derartige Lagerfugenmörtelschicht, ein Mauerwerk mit einer derartigen Lagerfugenmörtelschicht sowie ein Verfahren zur Herstellung einer derartigen Lagerfugenmörtelschicht und ein Verfahren zur Herstellung eines Mauerwerks. Zudem betrifft die Erfindung einen den Werkmauermörtel enthaltenden Trockenmörtelformkörper.

Ein Mauerwerk ist bekanntermaßen ein aus Mauersteinen als Massivbau gefügtes Bauteil. Die Mauersteine sind nebeneinander und übereinander angeordnet. Zur Ausbildung des Mauerwerks sind jeweils mehrere Steinreihen übereinander angeordnet, wobei zwischen zwei übereinander angeordneten Steinreihen jeweils eine durchgehende, horizontale Lagerfuge vorhanden ist. Die übereinander angeordneten Mauersteine sind mittels einer in der Lagerfuge angeordneten, erhärteten Lagerfugenmörtelschicht miteinander vermörtelt.

Zur Herstellung der Lagerfugenmörtelschichten wird in an sich bekannter Weise ein Mauermörtel verwendet. Aus dem Mauermörtel wird mit Wasser ein Frischmörtel hergestellt und der Frischmörtel in an sich bekannter Weise zur Herstellung der Lagerfugenmörtelschicht auf die Steinreihen aufgetragen. Die Anforderungen an Werkmauermörtel sind in der DIN EN 998-2:2017-02 festgelegt. Und die Anwendung von Werkmauermörtel in Bauwerken ist in der DIN 20000-412:2019-06 geregelt.

Bei Werkmauermörteln handelt es sich um werksseitig vorgemischte Trockenmörtelmischungen (Werk-Trockenmörtel bzw. Werkmörtel). Trockenmörtelmischungen sind vorfabrizierte Trockenmischungen, bestehend aus zumindest einem mineralischen Bindemittel, zumindest einem Zuschlagstoff, in der Regel zumindest einem Zusatzstoff und/oder zumindest einem Zusatzmittel, die auf der Baustelle nur noch mit Wasser zu einem Frischmörtel verarbeitet werden müssen und damit gebrauchsfertig sind.

Zusatzstoffe sind fein verteilte Stoffe, die bestimmte Eigenschaften des Mörtels beeinflussen. Sie beeinflussen vorrangig die Verarbeitbarkeit des Frisch- und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Zusatzstoffe sind z.B. in der DIN EN 12620:2015-07 "Natürliche Gesteinsmehle" oder der DIN EN 15167-1:2006-12 "Hüttensandmehl zur Verwendung in Beton, Mörtel und Einpressmörtel" genormt. Zusatzstoffe gehören zum Mehlkornanteil des Mörtels. Als Mehlkorn bzw. Mehl werden im Rahmen der Erfindung alle Körnungen bezeichnet, deren Korngröße ≤ 0,125 mm beträgt.

Zuschlagstoffe sind ebenfalls inert und gröber als Zusatzstoffe. Sie bestehen somit nicht ausschließlich aus Mehlkorn, können aber einen Mehlkornanteil aufweisen. Unter Zuschlagstoffen (Gesteinskörnung) versteht man ein körniges Material für die Verwendung im Bauwesen. Gesteinskörnungen werden nach ihrer Herkunft, ihrem Gefüge, der Korngröße sowie der Kornrohdichte eingeteilt und können natürlich, industriell hergestellt oder rezykliert sein. Grundsätzlich unterscheidet man anhand der Kornrohdichte ρ_{Rg}, bestimmt nach DIN 4226, zwischen Leichtzuschlag (leichter Gesteinskörnung) (ρ_{Rg} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³).

Unterschieden wird zudem zwischen geschlossenporigen leichten Gesteinskörnungen (geschlossenporiger Leichtzuschlag) wie Blähton und Blähglas mit geschlossenporigen Leichtzuschlagkörnern und offenporigen leichten Gesteinskörnungen (offenporiger Leichtzuschlag) wie Bims, geblähter Vermiculit und Blähperlit mit offenporigen Leichtzuschlagkörnern wie folgt: Die durch einen Bläh- bzw. Sinterprozess hergestellten geschlossenporigen Leichtzuschlagkörner weisen im Inneren ein stark vernetztes Porensystem und eine vergleichsweise dichte Sinterhaut auf. Die Sinterhaut weist kapillar hoch aktive Sinterporen mit einem Durchmesser von ca. 0,01 bis 40 µm auf. Auch geschlossenporige Leichtzuschlagkörner sind also an der Kornoberfläche nicht vollständig geschlossen. Geschlossenporige Leichtzuschlagkörner saugen am Anfang sehr schnell. Dann nimmt die Wasseraufnahme mit der Zeit stark ab. Offenporige Leichtzuschlagkörner hingegen weisen eine gleichmäßig verteilte, hohe Porosität über den gesamten Kornquerschnitt auf. Sie besitzen ein sehr hohes kapillares Saugvermögen und sind innerhalb weniger Sekunden bis Minuten wassergesättigt.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, pulverförmig oder als Granulat geliefert. In Trockenmörtelmischungen sind sie trocken, insbesondere pulverförmig oder als Granulat, enthalten. Zusatzmittel für Mörtel sind z.B. in der DIN EN 934-2:2012-08 "Zusatzmittel für Beton, Mörtel und Einpressmörtel" genormt.

Beim Mauermörtel unterscheidet man zudem unter anderem zwischen folgenden Mörtelarten:
Dünnbettmörtel wird für Plansteine, z.B. Planziegel, verwendet, also bei Mauersteinen, die eine geringe Maßabweichung in der Steinhöhe aufweisen. Dünnbettmörtel wird in der Regel in einer Fugendicke von 1-3 mm verarbeitet.

Leichtmauermörtel verbessert die wärmedämmenden Eigenschaften des Mauerwerks. Er enthält Leichtzuschläge wie z.B. Perlite, Blähton, Blähglas, Polystyrol oder Bims. Die Trockenrohdichte von Leichtmauermörtel beträgt < 1,3 kg/dm³. Leichtmauermörtel wird gemäß DIN EN 998-2:2017-02 und DIN 20000:412-2019-06 aufsteigend nach seiner Festigkeit in unterschiedliche Mörtelgruppen eingeteilt.

Normalmauermörtel haben eine Trockenrohdichte von mindestens 1,3 kg/dm³. Der Normalmauermörtel wird gemäß DIN EN 998-2:2017-02 und DIN 20000:412-2019-06 aufsteigend nach seiner Festigkeit in unterschiedliche Mörtelgruppen eingeteilt.

Zudem wird Mauermörtel nach seinem Verwendungszweck unterschieden in Vormauermörtel und Hintermauermörtel. Vormauermörtel wird überall dort eingesetzt, wo Sichtmauerwerk errichtet wird. Hintermauermörtel wird meist als der eigentliche Mauermörtel bezeichnet, da dieser im eigentlichen Mauerwerk zur Vermörtelung der Stoß- und Lagerfugen verwendet wird.

Die Mauersteine sind dabei oftmals als Lochsteine mit Hochlöchern ausgeführt. Aufgrunddessen muss sichergestellt werden, dass die frische Dünnbettmörtelschicht deckelnd ist, das heißt die Hochlöcher abdeckt und nicht in diese hinein fällt. "Gedeckelt" bzw. "deckelnd" bedeutet somit, dass eine die Hochlöcher der Hochlochsteine abdeckende, durchgehende Lagerfugenmörtelschicht erzeugt wird.

Beispielsweise kann zur Verbesserung der Deckelung in die Dünnbettmörtelschicht ein Gewebeflies eingearbeitet werden.

Zudem offenbart die DE 199 16 117 A1 einen Trockenmörtel zur deckelnden Dünnbettvermörtelung von Hochlochplanziegeln enthaltend ein Gemenge aus mindestens einem, insbesondere hydraulischen, mineralischen Bindemittel, insbesondere Portlandzement, und mindestens einem Leichtzuschlagstoff. Das Gemenge enthält als Zusatzmittel mindestens ein Polysaccharid-Verdickungsmittel in Kombination mit mindestens einem aktivierten mineralischen Verdicker in Mengen, die nach dem Anmachen des Trockenmörtels mit Wasser eine folienartig selbsttragende klebrige Konsistenz eines Frischmörteldünnbettauftrags ergeben. Bei dem Polysaccharid-Verdickungsmittel kann es sich z.B. um Xanthan oder Succinoglycan handeln. Als Leichtzuschlagstoff ist vorzugsweise ein geblähter, mineralischer Leichtzuschlagstoff enthalten, bevorzugt Blähglas, geblähter Vermiculit und/oder Blähperlit. Die Menge an geblähtem Leichtzuschlagstoff beträgt vorzugsweise 10-30 M.-%.

Aus der WO 2010/097556 A1 geht eine pulverförmige Mörtelmischung hervor, die mindestens 75 Vol.-% isolierende Mikrokugeln aufweist, wobei die Mörtelmischung mindestens 20 Vol.-% an Mikrokugeln aufweist, die einzellig sind und deren maximaler mittlerer Durchmesser kleiner als 0,5 mm ist. Bei den Mikrokugeln kann es sich um Mikroglashohlkugeln handeln. Die Mörtelmischung kann zudem mindestens 3 Vol.-%, bevorzugt mindestens 5 Vol.-%, und weniger als 20 Vol.-% Bindemittel enthalten. Bei dem Bindemittel handelt es sich vorzugsweise um Zement, vorzugsweise Portlandzement. Erwähnt wird auch Calciumsulfoaluminatzement.

Aufgabe der vorliegenden Erfindung ist die Bereitstellung eines trockenen, werksseitig angemischten, bevorzugt schüttfähigen, Mauermörtels (Werkmauermörtels), insbesondere eines Dünnbettmauermörtels, für die Herstellung einer deckelnden Lagerfugenfrischmörtelschicht eines bewehrten Mauerwerks, insbesondere einer Dünnbettfrischmörtelschicht, der gute wärmedämmende Eigenschaften des Mauerwerks gewährleistet.

Weitere Aufgabe ist die Bereitstellung eines den Werkmauermörtel aufweisenden Trockenmörtelformkörpers.

Weitere Aufgaben sind die Bereitstellung einer derartigen frischen oder erhärteten Lagerfugenmörtelschicht (Lagerfugenfrischmörtelschicht oder Lagerfugenfestmörtelschicht), eines Mauerwerks mit einer derartigen Lagerfugenmörtelschicht sowie eines Verfahrens zur Herstellung einer derartigen Lagerfugenmörtelschicht und eines Verfahrens zur Herstellung eines derartigen Mauerwerks.

Diese Aufgaben werden durch einen Werkmauermörtel gemäß Anspruch 1, einen Trockenmörtelformkörper gemäß Anspruch 14, eine Lagerfugenmörtelschicht gemäß Anspruch 17, ein Mauerwerk gemäß Anspruch 19, sowie eine Verwendung gemäß Anspruch 20, ein Verfahren zur Herstellung einer derartigen Lagerfugenmörtelschicht gemäß Anspruch 22 und ein Verfahren zur Herstellung eines derartigen Mauerwerks gemäß Anspruch 23 gelöst. Vorteilhafte Weiterbildungen der Erfindung sind in den sich anschließenden Unteransprüchen gekennzeichnet.

Gemäß der Erfindung weist der Werkmauermörtel
a) zumindest ein mineralisches, insbesondere hydraulisches, Bindemittel,
b) zumindest einen, bevorzugt mineralischen, offenporigen oder geschlossenporigen, Leichtzuschlagstoff,
c) zumindest ein Polysaccharid-Verdickungsmittel,
d) zumindest ein mineralisches Verdickungsmittel, und
e) 1 bis 4 M.-%, Mikrohohlglaskugeln mit einer Korngröße ≤ 0,125 mm, bevorzugt ≤ 115 µm, bestimmt gemäß ISO 13320:2009-10 mittels Lasergranulometrie, wobei die Mikrohohlglaskugeln geschlossenzellig und einzellig ausgebildet sind,
auf. Dabei weist der Werkmauermörtel erfindungsgemäß 2 bis 20 M.-%, bevorzugt 2 bis 15 M.-%, besonders bevorzugt 2 bis 6 M.-%, Leichtzuschlag auf, wobei der Werktrockenmörtel mindestens 2 M.-% offenporigen oder mindestens 2 M.-% geschlossenporigen Leichtzuschlag aufweist.

Im Folgenden wird die Erfindung anhand einer Zeichnung beispielhaft näher erläutert. Es zeigen:

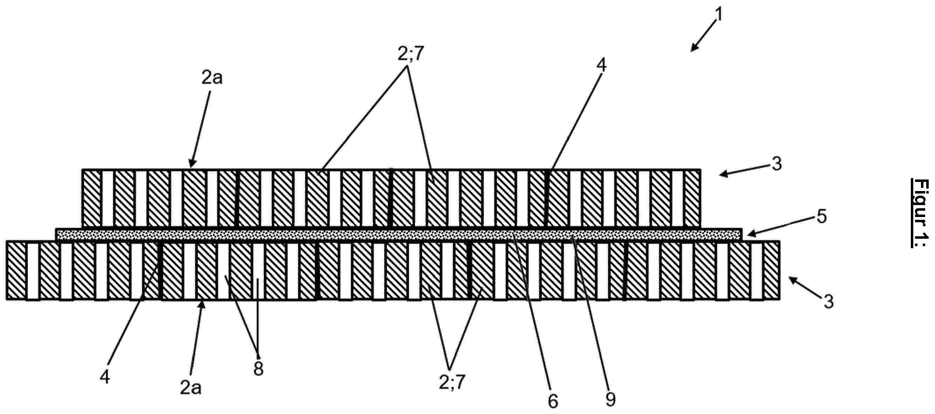

Figur 1: Schematisch eine Seitenansicht eines Teils eines Mauerwerks

Das erfindungsgemäße Mauerwerk 1 (Fig. 1) ist in an sich bekannter Weise aus mehreren Mauersteinen 2 aufgebaut, welche nebeneinander und übereinander angeordnet sind. Die nebeneinander angeordneten Mauersteine 2 bilden jeweils eine horizontale Steinreihe 3, wobei zwischen zwei nebeneinander angeordneten Mauersteinen 2 jeweils eine vertikale Stoßfuge 4 vorhanden ist. Die nebeneinander angeordneten Mauersteine 2 sind vorzugsweise nicht miteinander vermörtelt, sondern lediglich auf Stoß aneinander gesetzt. Insbesondere sind sie zusätzlich miteinander verzahnt. Sie können aber auch miteinander vermörtelt sein.

Zur Ausbildung des Mauerwerks 1 sind jeweils mehrere Steinreihen 3 übereinander angeordnet, wobei zwischen zwei übereinander angeordneten Steinreihen 3 jeweils eine durchgehende, horizontale Lagerfuge 5 vorhanden ist. Vorzugsweise sind dabei in an sich bekannter Weise die Stoßfugen 4 der übereinander angeordneten Steinreihen 3 in horizontaler Richtung zueinander versetzt, so dass sie in vertikaler Richtung nicht zueinander fluchtend sind. Die übereinander angeordneten Mauersteine 2 sind mittels einer in der Lagerfuge 5 angeordneten Lagerfugenmörtelschicht 6 miteinander vermörtelt.

Vorzugsweise handelt es sich bei den Mauersteinen 2 um Ziegelsteine und/oder um Kalksandsteine und/oder um Kalkblocksteine und/oder um Betonsteine und/oder Porenbetonsteine und/oder Leichtbetonsteine. Besonders bevorzugt handelt es sich zudem um Plansteine.

Plansteine sind bekanntermaßen künstliche, besonders genau hergestellte Mauersteine 2. Die horizontalen Steinauflageflächen 2a der Plansteine weisen eine höhere Genauigkeit und Planparallelität auf, weswegen sie mittels Dünnbettmörtel oder Kunststoffklebern vermörtelt werden können. Die Stoßfuge 4 ist in der Regel mörtellos verzahnt. Das aus Plansteinen bestehende Mauerwerk 1 ist ein Plansteinmauerwerk.

Um gute wärmedämmenden Eigenschaften des Mauerwerks 1 zu gewährleisten, handelt es sich bei den Mauersteinen 2 zudem vorzugsweise um Lochsteine bzw. Hochlochsteine 7, bevorzugt in Plansteinqualität. Es handelt sich somit um bevorzugt um Planlochsteine.

Die Hochlochsteine 7 weisen in an sich bekannterweise ein oder mehrere Hochlöcher 8 auf, die sich in vertikaler Richtung durch den jeweiligen Hochlochstein 7 durch. Sie sind somit zu den Steinauflageflächen 2a hin offen.

Die Mauersteine 2 können zudem auch mehrschalig ausgebildet sein. In diesem Fall weisen sie vorzugsweise einen tragenden Stein, vorzugsweise einen der oben genannten Steine, und eine Dämmschicht und gegebenenfalls weitere Schicht(en) auf.

Die Lagerfugenmörtelschicht 6 weist eine Lagerfugenmörtelmatrix 9 aus einem frischen oder erhärteten erfindungsgemäßen Werkmauermörtel auf.

Im Rahmen der Erfindung wurde nun herausgefunden, dass die deckelnden Eigenschaften der frischen Lagerfugenmörtelschicht 6 deutlich verbessert werden können, wenn zumindest ein Teil der üblicherweise enthaltenen Leichtzuschlagstoffe durch Mikrohohlglaskugeln ersetzt werden.

Der erfindungsgemäße Werkmauermörtel weist somit zumindest ein mineralisches, insbesondere hydraulisches, Bindemittel, sowie vorzugsweise zumindest einen, bevorzugt mineralischen, Leichtzuschlagstoff, zumindest ein Polysaccharid-Verdickungsmittel und zumindest ein mineralisches Verdickungsmittel sowie als Zusatzstoff erfindungsgemäß Mikrohohlglaskugeln auf. Zudem kann der Werkmauermörtel zudem zumindest einen weiteren Zusatzstoff und/oder gegebenenfalls zumindest ein weiteres Zusatzmittel aufweisen.

Vorzugsweise weist der Werkmauermörtel 75 bis 95 M.-%, bevorzugt 80 bis 92 M.-% mineralisches Bindemittel auf.

Sofern nicht anders angegeben, beziehen sich die im Rahmen der Erfindung genannten Mengenangaben selbstverständlich auf die Trockenmasse des Werkmauermörtels.

Des Weiteren handelt es sich bei dem Bindemittel vorzugsweise um Zement, bevorzugt Portlandzement und/oder Calciumaluminatzement und/oder Calciumsulfoaluminatzement, und/oder um hydraulischen Kalk, bevorzugt natürlichen hydraulischen Kalk, und/oder um Kalkhydrat und/oder einen puzzolanischen Zusatzstoff. Besonders bevorzugt handelt es sich um Portlandzement. Portlandzement (CEM I) ist bekanntermaßen genormt gemäß DIN EN 197-1:2011-11.

Hydraulische Kalke enthalten zusätzlich zum Calciumhydroxid sogenannte Hydraulefaktoren, etwa Silikate (z. B. SiO₂), Aluminate (z. B. Al₂O₃) und Eisenoxide (z. B. Fe₂O₃) aus denen sich Calciumsilikate und Calciumaluminate bilden. Der hydraulische Anteil der Bindemittel kann auch unter Wasser aushärten, da kein Zutritt von Kohlendioxid notwendig ist.

Wie bereits erläutert, enthält der erfindungsgemäße Werkmauermörtel zudem zumindest einen, bevorzugt mineralischen, Leichtzuschlagstoff. Erfindungsgemäß beträgt die Gesamtmenge an Leichtzuschlag bzw. an Leichtzuschlagstoff(en) 2 bis 20 M.-%, bevorzugt 2 bis 15 M.-%, besonders bevorzugt 2 bis 6 M.-%. Vorzugsweise enthält der erfindungsgemäße Werkmauermörtel zudem ausschließlich mineralische(n) Leichtzuschlagstoff(e).

Erfindungsgemäß beträgt dabei, wie bereits erläutert, die Gesamtmenge an offenporigem Leichtzuschlag mindestens 2 M.-% oder die Gesamtmenge an geschlossenporigem Leichtzuschlag mindestens 2 M.-%.

Vorzugsweise weist der erfindungsgemäße Werkmauermörtel als Leichtzuschlagstoff Blähperlit und/oder geblähten Vermiculit und/oder Blähglas und/oder Hydrosilikate (geschäumtes Wasserglas) und/oder Blähton und/oder poröse Sande und/oder Blähschiefer und/oder Bims und/oder Tuff und/oder Polysterol auf. Bevorzugt handelt es sich um Blähperlit und/oder Vermiculit und/oder Blähglas.

Der Leichtzuschlag (=alle Leichtzuschlagstoffe des Werkmauermörtels zusammen genommen), weist zudem vorzugsweise eine Korngröße ≤ 3,0 mm, bevorzugt ≤ 2,0 mm, ermittelt anhand des Siebdurchgangs gemäß DIN EN 1015-1:2007-05 auf.

Vorzugsweise weist der Leichtzuschlag des erfindungsgemäßen Werkmauermörtels zudem folgende Korngrößenverteilung auf, ermittelt anhand des Siebdurchgangs gemäß DIN EN 1015-1:2007-05 (die einzelnen Komponenten addieren sich zu 100 M.-%):

| | **[M.-%]** | |
|---|---|---|
| **Korngrößen** | | **vorzugsweise** |
| **≤ 0,09 mm** | 2 - 40 | 3 - 35 |
| **> 0,09 -0,2 mm** | 3 - 40 | 4 - 35 |
| **> 0,2 - 0,63 mm** | 20 - 90 | 30 - 90 |
| **> 0,63 - 1,0mm** | 0 - 20 | 0 - 15 |
| **> 1,0 mm** | 0 - 10 | 0 - 5 |

Des Weiteren weist der Werkmauermörtel, wie ebenfalls bereits erläutert, zumindest ein Polysaccharid-Verdickungsmittel auf. Verdickungsmittel erhöhen die Viskosität der Lösungen, denen sie zugesetzt werden. Verdickungsmittel sind somit Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt noch Netzwerkeffekte auf, die zu einer meist überproportionalen Erhöhung der Viskosität führen.

Der Werkmauermörtel weist insgesamt (=Gesamtmenge an Polysaccharid-Verdickungsmittel) vorzugsweise 0,002 bis 1,5 M.-%, bevorzugt 0,003 bis 1,0 M.-%, besonders bevorzugt 0,002 bis 0,5 M.-%, ganz besonders bevorzugt 0,003 bis 0,1 M.-%, Polysaccharid-Verdickungsmittel auf.

Bei dem Polysaccharid-Verdickungsmittel handelt es sich zudem vorzugsweise um Xanthan.

Vorzugsweise weist der Werkmauermörtel 0,002 bis 0,5 M.-%, bevorzugt 0,003 bis 0,1 M.-% Xanthan, auf.

Der Werkmauermörtel kann zudem zumindest ein weiteres Zusatzmittel, insbesondere einen Luftporenbildner und/oder ein Wasserretentionsmittel, z.B. Methylcellulose, und/oder ein Dispersionspulver und/oder ein Hydrophobierungsmittel, aufweisen. Vorzugsweise weist der Werkmauermörtel zumindest ein Wasserretentionsmittel, bevorzugt Celluloseether, besonders bevorzugt Methylcellulose, als weiteres Zusatzmittel auf.

Der Werkmauermörtel weist zudem erfindungsgemäß zumindest ein mineralisches, bevorzugt aktiviertes, Verdickungsmittel auf, vorzugsweise in Mengen von 0,1 bis 1,0 M.-%, bevorzugt 0,3 bis 0,7 M.-%.

Das Polysaccharid-Verdickungsmittel in Kombination mit dem aktivierten mineralischen Verdicker gewährleistet nach dem Anmachen des trockenen Werkmauermörtels mit Wasser eine folienartig selbsttragende Konsistenz der daraus hergestellten frischen Lagerfugenmörtelschicht bzw. Lagerfugenfrischmörtelschicht 6. Und dadurch wiederum wird gewährleistet, dass die frische Lagerfugenmörtelschicht bzw. Lagerfugenfrischmörtelschicht 6 deckelnd ist.

Das mineralische Verdickungsmittel besteht aus schichtförmigen, quellfähigen, bevorzugt aktivierten, Tonmineralen (Schichtsilikate). Vorzugsweise handelt es sich um, bevorzugt aktivierten, Bentonit und/oder Hectorit und/oder Smektit und/oder Montmorillonit.

Bekanntermaßen ist bei aktivierten Tonmineralen, insbesondere Bentonit, das Quell- und Bindevermögen durch Zugabe von Zusätzen, insbesondere von Soda oder Calciumionen, erhöht.

Das mineralische Verdickungsmittel kann natürlich oder synthetisch hergestellt sein.

Vorzugsweise weist der Werkmauermörtel 0,1 bis 1,0 M.-%, bevorzugt 0,3 bis 0,7 M.-% Bentonit, auf.

Gemäß einer Ausführungsform weist der Werkmauermörtel außerdem Fasern, bevorzugt in Mengen von 0,01 bis 0,1 M.-%, insbesondere in Mengen von 0,01 bis 0,05 M.-%, auf. Die Fasern weisen vorzugsweise eine Faserlänge von 4 bis 10 mm, bevorzugt 6 bis 8 mm, auf. Bei den Fasern handelt es sich vorzugsweise um Glasfasern und/oder Polymerfasern. Die Fasern erhöhen die Festigkeit der aus dem Werkmauermörtel hergestellten, erhärteten Lagerfugenmörtelschicht 6. Fasern werden im Rahmen der Erfindung weder als Zusatzstoffe noch als Zuschlagstoffe angesehen, sondern als eigenständige Kategorie.

Erfindungsgemäß weist der Werkmauermörtel zudem die Mikrohohlglaskugeln auf. Erfindungsgemäß beträgt die Menge an Mikrohohlglaskugeln 1 bis 4 M.-%.

Zudem kann der Werkmauermörtel als inerten Zusatzstoff zusätzlich zu den Mikroglashohlkugeln zumindest einen weiteren inerten Zusatzstoff aufweisen. Beispielsweise kann der Werkmauermörtel Kalksteinmehl und/oder Aerogel und/oder Quarzmehl aufweisen. Die Gesamtmenge an weiteren Zusatzstoffen liegt vorzugsweise bei ≤ 15 M.-%, bevorzugt ≤ 10 M.-%, besonders bevorzugt ≤ 5 M.-%.

Zudem kann der Werkmauermörtel auch zumindest einen Normalzuschlagstoff aufweisen, z.B. Quarzsand. Die Gesamtmenge an Normalzuschlag liegt vorzugsweise bei ≤ 10 M.-%, bevorzugt ≤ 5 M.-%, besonders bevorzugt ≤ 2 M.-%. Bevorzugt weist der Werktrockenmörtel jedoch keinen Normalzuschlag auf.

Es hat sich dabei erfindungsgemäß herausgestellt, dass die Schüttdichte des Werkmauermörtels durch den Einsatz der Mikrohohlglaskugeln verringert werden kann. Je geringer das Eigengewicht des Werkmauermörtels ist, desto besser sind seine deckelnden Eigenschaften, da er weniger dazu neigt, sich durchzubiegen und in die Hochlöcher 8 hinein zu fallen. Dadurch kann auch die Größe der Hochlöcher 8 erhöht werden, wodurch wiederum die wärmedämmenden Eigenschaften des gesamten Mauerwerks 1 verbessert werden können. Der erfindungsgemäße Werkmauermörtel kann also größere Hochlöcher 8 überspannen, ohne in diese hinein zu fallen.

Vorzugsweise weist der erfindungsgemäße Werkmauermörtel eine Schüttdichte gemäß DIN EN 459-2:2010-12 von 0,6 bis 1,0 kg/dm³, bevorzugt 0,7 bis 0,95 kg/dm³, auf.

Des Weiteren ist es aber vorteilhaft, dass der Werkmauermörtel neben den Mikrohohlglaskugeln den zumindest einen Leichtzuschlagstoff aufweist.

Denn die geschlossenzelligen Mikrohohlglaskugeln sorgen einerseits wie bereits erläutert für ein geringes Schüttgewicht des Werktrockenmörtels und somit auch eine geringe Dichte des daraus hergestellten Frischmörtels und Festmörtels. Zudem bewirken sie eine geschlossene Porosität. Gleichzeitig verbessert sich das rheologische Verhalten und durch die Geometrie der Mikrohohlglaskugeln ergibt sich ein verringerter Bindemitteleinsatz. Zudem wird auch der Anmachwasserbedarf gesenkt, da die geschlossenen Mikrohohlglaskugeln kein Anmachwasser aufsaugen.

Andererseits sorgt der, bevorzugt offenporige, Leichtzuschlag für eine offene Porosität. Er saugt zudem Anmachwasser auf, speichert dieses und sorgt dafür, dass ausreichend Wasser für die Hydratation zur Verfügung steht.

Durch die Kombination der Mikrohohlglaskugeln mit dem, bevorzugt offenporigen, Leichtzuschlag, kann somit der Anmachwasserbedarf optimiert werden.

Dies wiederum führt zu verbesserten mechanischen Eigenschaften des hergestellten Festmörtels, insbesondere zu einer verbesserten Festigkeit bei gleichzeitig geringer Trockenrohdichte.

Vorzugsweise beträgt das Masseverhältnis Mikroglashohlkugeln/Leichtzuschlag 0,5 bis 10, bevorzugt 1 bis 8.

Die Mikrohohlglaskugeln sind, wie bereits erläutert, geschlossenzellig ausgebildet. Sie weisen eine Kugelwandung mit einer geschlossenen Kugeloberfläche auf. Die Kugelwandung umgibt einen Kugelinnenraum. Zudem sind die Mikrohohlglaskugeln einzellig ausgebildet. Das heißt, der Kugelinnenraum ist nicht in mehrere Zellen unterteilt, sondern einzellig ausgebildet.

Vorzugsweise weisen die Mikrohohlglaskugeln außerdem eine Schüttdichte gemäß DIN EN 459-2:2010-12, von 0,06 bis 0,1 g/cm³, bevorzugt von 0,07 bis 0,08 g/cm³, auf.

Vorzugsweise weisen die Mikrohohlglaskugeln zudem eine Nenndichte (Teilchendichte) bestimmt mittels Pyknometer mit der Testmethode QCM 14.24.1 der Firma 3M von 0,13 bis 0,17 g/cm³, bevorzugt von 0,14 bis 0,16 g/cm³, auf.

Des Weiteren bestehen die Mikrohohlglaskugeln vorzugsweise aus Borsilikatglas oder Kalknatronglas (Recyclingglas). Bevorzugt bestehen sie aber aus Borsilikatglas.

Vorzugsweise weisen die Mikrohohlglaskugeln zudem einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie, auf. Der dₓ-Wert gibt an, dass x [Vol.-%] der Teilchen einen Durchmesser kleiner als den angegeben Wert aufweisen.

Vorzugsweise weisen die Mikrohohlglaskugeln zudem einen maximalen Teilchendurchmesser, bestimmt gemäß ISO 13320:2009-10 mittels Lasergranulometrie, von ≤ 115 µm auf.

Für die Bestimmung der Teilchengrößen wird vorzugsweise das Gerät CILAS 1064 nass verwendet.

Zudem weisen die Mikroglashohlkugeln vorzugsweise eine Wärmeleitfähigkeit λ₁₀ₜᵣ gemäß DIN EN 12664:2001-05, von 0,045 bis 0,065 W/(m·K), bevorzugt von 0,05 bis 0,06 W/(m·K), auf.

Des Weiteren wurde im Rahmen der Erfindung herausgefunden, dass der erfindungsgemäße Werkmauermörtel auch eine verbesserte Mörteldruckfestigkeit aufweist. Vorzugsweise weist der erfindungsgemäße Werkmauermörtel eine Mörteldruckfestigkeit gemäß DIN EN 1015-11:2007-05 von 10 bis 20 N/mm², bevorzugt von 11 bis 15 N/mm², auf.

Vorzugsweise weist der erfindungsgemäße Werkmauermörtel zudem eine Mörtelbiegefestigkeit gemäß DIN EN 1015-11:2007-05 von 2,0 bis 6,0 N/mm², bevorzugt von 2,2 bis 4,2 N/mm², auf.

Die guten Festigkeitseigenschaften resultieren unter anderem aus der hohen Druckfestigkeit der Mikroglashohlkugeln. Denn die Mikroglashohlkugeln weisen eine hohe isostatische Druckfestigkeit bestimmt mittels der Testmethode QCM 14.1.5 der Firma 3M auf. Bei einem Testdruck von 21 bar beträgt der Anteil unzerstörter Mikroglashohlkugeln vorzugsweise mindestens 80 Vol.-%, bevorzugt mindestens 85 Vol.-%. Dies verbessert auch die Festigkeitseigenschaften der hergestellten Lagerfugenmörtelschicht 6.

Gleichzeitig weist der erfindungsgemäße Werkmauermörtel aufgrund des hohen Anteils an Mikroglashohlkugeln aber eine sehr geringe Trockenrohdichte gemäß DIN EN 1015-10:2007-05 und eine sehr geringe Wärmeleitfähigkeit λ₁₀ₜᵣ gemäß DIN EN 12664:2001-05 auf.

Insbesondere weist der erfindungsgemäße Werkmauermörtel eine Trockenrohdichte gemäß DIN EN 1015-10:2007-05 von 0,5 bis 0,95 kg/dm³, bevorzugt von 0,6 bis 0,90 kg/dm³, auf. Somit handelt es sich bei dem erfindungsgemäßen Werkmauermörtel um einen Leichtmauermörtel gemäß DIN EN 998-2:2017-02.

Zudem weist der erfindungsgemäße Werkmauermörtel vorzugsweise eine Wärmeleitfähigkeit λ₁₀ₜᵣ gemäß DIN EN 12664:2001-05 von 0,14 bis 0,21 W/(m·K), bevorzugt von 0,15 bis 0,20 W/(m·K), auf.

Vorzugsweise weist der erfindungsgemäße Werkmauermörtel (ohne gegebenenfalls vorhandene Fasern bzw. die Fasern werden, falls vorhanden, nicht miteinbezogen) zudem folgende Korngrößenverteilung auf, ermittelt anhand des Siebdurchgangs gemäß DIN EN 1015-1:2007-05 (die einzelnen Komponenten addieren sich zu 100 M.-%):

| | **[M.-%]** | |
|---|---|---|
| **Korngrößen** | | **vorzugsweise** |
| **≤ 0,09 mm** | 69,5-96 | 75-96 |
| **> 0,09 -0,2 mm** | 1-25 | 1-20 |
| **> 0,2 - 0,63 mm** | 0,5-20 | 0,5-15 |
| **> 0,63 - 1,0mm** | 0-15 | 0-10 |
| **> 1,0 mm** | 0-10 | 0-5 |

Der erfindungsgemäße Werkmauermörtel besteht vorzugsweise zu mindestens 85 M.-%, bevorzugt zu mindestens 92 M.-%, besonders bevorzugt zu mindestens 95 M.-%, aus mineralischem Bindemittel, Leichtzuschlag, Polysaccharid-Verdickungsmittel, mineralischem Verdickungsmittel und Mikrohohlglaskugeln.

Wie bereits erläutert, wird mit dem erfindungsgemäßen trockenen Werkmauermörtel eine Lagerfugenmörtelschicht 6 eines Mauerwerks 1 hergestellt.

Dazu wird zunächst vom jeweiligen Anwender ein Frischmörtel aus dem Werkmauermörtel hergestellt, wozu der Werkmauermörtel in an sich bekannter Weise mit Anmachwasser gemischt wird.

Der Werkmauermörtel liegt dabei schüttfähig bzw. als loses Schüttgut vor. Er wird vorzugsweise dabei als Sackware oder als Siloware in einem Bausilo bzw. Trockenmörtelsilo an den jeweiligen Einsatzort, insbesondere die Baustelle, geliefert.

Der durch Anmischen des erfindungsgemäßen Werkmauermörtels mit Wasser hergestellte Frischmörtel weist zudem vorzugsweise eine Frischmörtelrohdichte gemäß DIN EN 1015-6:2007-05 von 0,85 bis 1,25 kg/m³, bevorzugt von 0,9 bis 1,1 kg/m³, auf.

Zur Herstellung des Mauerwerks 1 wird nun zumindest eine Frischmörtelschicht aus dem Frischmörtel auf eine erste Steinreihe 3 aufgetragen. Dies erfolgt z.B. in an sich bekannter Weise mittels eines Mörtelschlittens.

Danach wird eine weitere Steinreihe 3 auf die so hergestellte, frische Lagerfugenmörtelschicht 6 aufgelegt und vorzugsweise mit einigen Hammerschlägen fixiert. Dabei werden die einzelnen Mauersteine 2 auf Stoß, unter Ausbildung einer Stoßfuge 4, aneinander gesetzt.

Diese Herstellungsschritte werden so lange wiederholt, bis das Mauerwerk 1 fertig gestellt ist.

Falls gewünscht, können in die Lagerfugenmörtelschicht 6 auch ein oder mehrere Bewehrungstextile, z.B. Bewehrungsgewebe und/oder Bewehrungsgelege, eingebettet bzw. eingemörtelt werden. Die erfindungsgemäße Lagerfugenmörtelschicht 6 ist allerdings auch ohne Bewehrungstextil deckelnd.

Wie bereits erläutert wird vorzugsweise zudem eine Dünnbettmörtelschicht als Lagerfugenmörtelschicht 6 hergestellt. Das heißt, die Dicke der hergestellten Lagerfugenmörtelschicht 6 beträgt vorzugsweise 1 bis 3 mm.

Dennoch weist die hergestellte, frische Lagerfugenmörtelschicht 6 eine selbsttragende, folienartige Konsistenz auf, so dass sie die Hochlöcher 8 der Hochlochsteine 7 abdeckt bzw. deckelt und nicht in diese hinein fällt. Die geringe Schüttdichte des erfindungsgemäßen Werkmauermörtels und die daraus resultierende geringe Frischmörtelrohdichte verbessert die selbsttragenden Eigenschaften weiter.

Wie bereits oben erläutert bewirken die Mikroglashohlkugeln, insbesondere in Kombination mit zumindest einem, bevorzugt offenporigen, Leichtzuschlagstoff, dass der Bindemittelanteil bei gleichzeitiger Absenkung des Wasserbedarfs und Erhöhung der Festigkeit abgesenkt werden kann.

Im Rahmen der Erfindung liegt es zudem auch, dass der Werkmauermörtel in einem Trockenmörtelformkörper, vorzugsweise einer Trockenmörtelplatte analog der DE 10 2013 007 800 A1, verwendet wird. In diesem Fall liegt der Werkmauermörtel nicht wie vorher beschrieben in loser bzw. schüttfähiger Form bzw. als loses Schüttgut vor, sondern ist mittels eines wasserlöslichen Klebemittels verfestigt.

Die Trockenmörtelplatte weist nämlich zumindest eine Trockenmörtelschicht auf, die eine mittels eines wasserlöslichen Klebemittels verfestigte Trockenmörtelmischung aufweist, wobei die Trockenmörtelmischung aus dem Werkmauermörtel besteht. Zudem weist die Trockenmörtelplatte vorzugsweise zumindest ein Trägerband, insbesondere ein flächiges Bewehrungstextil, auf, das zumindest einseitig mit zumindest einer derartigen Trockenmörtelschicht abgedeckt ist. Das Klebemittel verbindet die Bestandteile der Trockenmörtelmischung(en) miteinander und mit dem Bewehrungstextil.

Zur Herstellung der frischen Lagerfugenmörtelschicht 6 werden die Trockenmörtelplatten in an sich bekannter Weise auf die Steinreihe 3 aufgelegt und bewässert, wobei sich das Klebemittel auflöst und sich Frischmörtel bildet.

Zudem kann es sich bei dem Trockenmörtelformkörper auch um ein Trockenmörtelbrikett oder ein Trockenmörtelgranulatkorn, insbesondere ein Trockenmörtelpellet, handeln. In diesem Fall weist der Trockenmörtelformkörper eine Trockenmischung auf, die eine mittels eines wasserlöslichen, schmelzbaren Klebemittels verfestigte Trockenmörtelmischung aufweist, wobei die Trockenmörtelmischung aus dem Werkmauermörtel besteht. Mehrere Trockenmörtelformkörper, insbesondere Trockenmörtelgranulatkörner, können dabei ebenfalls ein Schüttgut, insbesondere ein Granulat, bilden.

Die Trockenmörtelformkörper werden ebenfalls in an sich bekannter Weise auf der Baustelle mit Anmachwasser zu Frischmörtel verarbeitet.

Abschließend wird darauf hingewiesen, dass alle genannten, insbesondere beanspruchten, Merkmale des Werkmauermörtels, der Lagerfugenmörtelschicht und des Mauerwerks für sich genommen und in jeglicher Kombination besonders vorteilhaft und Gegenstand der vorliegenden Erfindung sind. Zudem sind die jeweils angegebenen Ober- und Untergrenzen der einzelnen Bereichsangaben erfindungsgemäß alle miteinander kombinierbar.

Im Folgenden wird noch eine beispielhafte, nicht erfindungsgemäße, Rezeptur des Werkmauermörtels angegeben:

| **Ausführungsbeispiel** | | | |
|---|---|---|---|
| | **Bestandteil** | **Anteil** | **Anteil** |
| | | **[kg/t]** | **[M.-%]** |
| | Portlandzement CEM I | 895 | 89,5 |
| | Perlite 0-1 mm | 15 | 1,5 |
| | Kalksteinmehl 0-0,09 mm | 42,9 | 4,29 |
| | Mikroglashohlkugeln 20-50 µm | 40 | 4 |
| | Stärkeether | 0,2 | 0,02 |
| | Schichtsilikat | 3 | 0,3 |
| | Polysaccharid | 0,05 | 0,005 |
| | Zinnsulfat | 0,85 | 0,085 |
| | Celluloseether | 3 | 0,3 |
| **SUMME** | | **1000** | **100** |

Der Werkmauermörtel weist folgende Eigenschaften auf:

| | | |
|---|---|---|
| **Mörteldruckfestigkeit gemäß DIN EN 1015 -11:2007** | **[N/mm²]** | 10,9 |
| **Frischmörtelrohdichte gemäß DIN EN 1015-6:2007-05** | **[kg/dm³]** | 1,114 |
| **Trockenrohdichte gemäß DIN EN 1015-10:2007-05** | **[kg/dm³]** | 0,78 |
| **Wärmeleitfähigkeit gemäß DIN EN 12664:2001-05** | **[W/(m*K)]** | 0,187 |

Der Werkmauermörtel wurde mit 64 M.-% Wasser, bezogen auf die Trockenmasse des Werkmauermörtels, angemischt der so hergestellte Frischmörtel zur Herstellung eines Mauerwerks aus Hochlochziegeln verwendet. Die Lagerfugenmörtelschicht wurde mit einem Mörtelschlitten als Dünnbettmörtelschicht aufgetragen. Die frische Lagerfugenmörtelschicht verhielt sich selbsttragend und deckelnd, die Hochlöcher in den Hochlochziegeln wurden abgedeckt. Nach dem Erhärten der Lagerfugenmörtelschicht wies das Mauerwerk hervorragende wärmedämmende und mechanische Eigenschaften auf.

## Patentansprüche

1. Werkmauermörtel für die Herstellung einer, insbesondere deckelnden, Lagerfugenmörtelschicht (6) eines Mauerwerks (1),
wobei der Werkmauermörtel
a) zumindest ein mineralisches, insbesondere hydraulisches, Bindemittel,
b) 2 bis 20 M.-%, bezogen auf die Trockenmasse des Werkmauermörtels, Leichtzuschlag aus zumindest einem, bevorzugt mineralischen, Leichtzuschlagstoff,
c) zumindest ein Polysaccharid-Verdickungsmittel,
d) zumindest ein mineralisches Verdickungsmittel, und
e) als Zusatzstoff neben dem Leichtzuschlag 1 bis 4 M.-%, bezogen auf die Trockenmasse des Werkmauermörtels, Mikrohohlglaskugeln, wobei die Mikrohohlglaskugeln geschlossenzellig und einzellig ausgebildet sind,
aufweist,
wobei der Werkmauermörtel mindestens 2 M.-% offenporigen oder mindestens 2 M.-% geschlossenporigen Leichtzuschlag aufweist, bezogen auf die Trockenmasse des Werkmauermörtels.

2. Werkmauermörtel nach Anspruch 1,
**dadurch gekennzeichnet, dass**
der Werkmauermörtel 2 bis 15 M.-%, bevorzugt 2 bis 6 M.-%, Leichtzuschlag, bezogen auf die Trockenmasse des Werkmauermörtels, aufweist.

3. Werkmauermörtel nach einem der vorhergehenden Ansprüche,
**dadurch gekennzeichnet, dass**
a) der Werkmauermörtel zumindest einen offenporigen Leichtzuschlagstoff aufweist,
und/oder
b) der Werkmauermörtel ausschließlich mineralische(n) Leichtzuschlagstoff(e) aufweist.

4. Werkmauermörtel nach einem der vorhergehenden Ansprüche, **dadurch gekennzeichnet, dass**
a) der Werkmauermörtel 0,002 bis 1,5 M.-%, bevorzugt 0,003 bis 1,0 M.-%, besonders bevorzugt 0,002 bis 0,5 M.-%, ganz besonders bevorzugt 0,003 bis 0,1 M.-%, Polysaccharid-Verdickungsmittel, bezogen auf die Trockenmasse des Werkmauermörtels, aufweist, und/oder
b) der Werkmauermörtel, insbesondere ausschließlich, Xanthan als Polysaccharid-Verdickungsmittel aufweist, vorzugsweise in einer Menge von 0,002 bis 0,5 M.-%, bevorzugt 0,003 bis 0,1 M.-%, bezogen auf die Trockenmasse des Werkmauermörtels, und/oder
c) der Werkmauermörtel 0,1 bis 1,0 M.-%, bevorzugt 0,3 bis 0,7 M.-%, mineralisches Verdickungsmittel aufweist, bezogen auf die Trockenmasse des Werkmauermörtels,
und/oder
d) das mineralische Verdickungsmittel aus schichtförmigen, quellfähigen, bevorzugt aktivierten, Tonmineralen besteht, insbesondere aus Bentonit und/oder Hectorit und/oder Smektit und/oder Montmorillonit besteht.

5. Werkmauermörtel nach einem der vorhergehenden Ansprüche,
**dadurch gekennzeichnet, dass**
a) der Werkmauermörtel 75 bis 95 M.-%, bevorzugt 80 bis 92 M.-%, mineralisches Bindemittel aufweist, bezogen auf die Trockenmasse des Werkmauermörtels,
und/oder
b) es sich bei dem mineralischen Bindemittel um Zement, bevorzugt Portlandzement und/oder Calciumaluminatzement und/oder Calciumsulfoaluminatzement, und/oder hydraulischen Kalk, bevorzugt natürlichen hydraulischen Kalk, und/oder um Kalkhydrat und/oder um einen puzzolanischen Zusatzstoff, handelt.

6. Werkmauermörtel nach einem der vorhergehenden Ansprüche,
**dadurch gekennzeichnet, dass**
a) der Werkmauermörtel als Leichtzuschlagstoff Blähperlit und/oder geblähten Vermiculit und/oder Blähglas und/oder Hydrosilikate (geschäumtes Wasserglas) und/oder Blähton und/oder poröse Sande und/oder Blähschiefer und/oder Bims und/oder Tuff und/oder Polysterol, bevorzugt Blähperlit und/oder geblähten Vermiculit und/oder Blähglas, aufweist,
und/oder
b) der Leichtzuschlag des Werkmauermörtels eine Korngröße ≤ 3, mm, bevorzugt ≤ 2 mm, ermittelt anhand des Siebdurchgangs gemäß DIN EN 1015-1:2007-05, aufweist,
und/oder
c) der Leichtzuschlag des Werkmauermörtels folgende Korngrößenverteilung aufweist, ermittelt anhand des Siebdurchgangs gemäß DIN EN 1015-1:2007-05 (die einzelnen Komponenten addieren sich zu 100 M.-%):
| | **[M.-%]** | |
|---|---|---|
| **Korngrößen** | | **vorzugsweise** |
| **≤ 0,09 mm** | 2 - 40 | 3 - 35 |
| **> 0,09 -0,2 mm** | 3 - 40 | 4 - 35 |
| **> 0,2 - 0,63 mm** | 20 - 90 | 30 - 90 |
| **> 0,63 - 1,0mm** | 0 - 20 | 0 - 15 |
| **> 1,0 mm** | 0 - 10 | 0 - 5 |

7. Werkmauermörtel nach einem der vorhergehenden Ansprüche,
**dadurch gekennzeichnet, dass**
a) der Werkmauermörtel ohne gegebenenfalls vorhandene Fasern folgende Korngrößenverteilung aufweist, ermittelt anhand des Siebdurchgangs gemäß DIN EN 1015-1:2007-05 (die einzelnen Komponenten addieren sich zu 100 M.-%):
| | **[M.-%]** | |
|---|---|---|
| **Korngrößen** | | **vorzugsweise** |
| **≤ 0,09 mm** | 69,5-96 | 75-96 |
| **> 0,09 -0,2 mm** | 1-25 | 1-20 |
| **> 0,2 - 0,63 mm** | 0,5-20 | 0,5-15 |
| **> 0,63 - 1,0mm** | 0-15 | 0-10 |
| **> 1,0 mm** | 0-10 | 0-5 |
und/oder
b) der Werkmauermörtel eine Schüttdichte gemäß DIN EN 459-2:2010-12 von 0,6 bis 1,0 kg/dm³, bevorzugt 0,7 bis 0,95 kg/dm³, aufweist.

8. Werkmauermörtel nach einem der vorhergehenden Ansprüche,
**dadurch gekennzeichnet, dass**
das Masseverhältnis Mikroglashohlkugeln/Leichtzuschlag 0,5 bis 10, bevorzugt 1 bis 8, beträgt.

9. Werkmauermörtel nach einem der vorhergehenden Ansprüche,
**dadurch gekennzeichnet, dass**
a) der Werkmauermörtel eine Mörteldruckfestigkeit gemäß DIN EN 1015-11:2007-05 von 10 bis 20 N/mm², bevorzugt von 11 bis 15 N/mm², aufweist,
und/oder
b) der Werkmauermörtel eine Mörtelbiegefestigkeit gemäß DIN EN 1015-11:2007-05 von 2,0 bis 6,0 N/mm², bevorzugt von 2,0 bis 4,2 N/mm², aufweist,
und/oder
c) der Werkmauermörtel eine Trockenrohdichte gemäß DIN EN 1015-10:2007-05 von 0,5 bis 0,95 kg/dm³, bevorzugt von 0,6 bis 0,9 kg/dm³, aufweist,
und/oder
d) der Werkmauermörtel eine Wärmeleitfähigkeit λ₁₀ₜᵣ gemäß DIN EN 12664:2001-05 von 0,14 bis 0,21 W/(m·K), bevorzugt von 0,15 bis 0,20 W/(m·K), aufweist.

10. Werkmauermörtel nach einem der vorhergehenden Ansprüche,
**dadurch gekennzeichnet, dass**
der Werkmauermörtel zu mindestens 85 M.-%, bevorzugt zu mindestens 92 M.-%, besonders bevorzugt zu mindestens 95 M.-%, bezogen auf die Trockenmasse des Werkmauermörtels, aus mineralischem Bindemittel, Leichtzuschlag, Polysaccharid-Verdickungsmittel, mineralischem Verdickungsmittel und Mikrohohlglaskugeln besteht.

11. Werkmauermörtel nach einem der vorhergehenden Ansprüche,
**dadurch gekennzeichnet, dass**
a) der Werkmauermörtel zumindest einen weiteren inerten Zusatzstoff zusätzlich zu den Mikroglashohlkugeln aufweist, wobei vorzugsweise die Gesamtmenge an weiteren Zusatzstoffe(n) ≤ 15 M.-%, bevorzugt ≤ 10 M.-%, besonders bevorzugt ≤ 5 M.-%, beträgt, bezogen auf die Trockenmasse des Werkmauermörtels,
und/oder
b) der Werkmauermörtel ≤ 10 M.-%, bevorzugt ≤ 5 M.-%, besonders bevorzugt ≤ 2 M.-%, bezogen auf die Trockenmasse des Werkmauermörtels, Normalzuschlag, bevorzugt keinen Normalzuschlagstoff, aufweist.

12. Werkmauermörtel nach einem der vorhergehenden Ansprüche,
**dadurch gekennzeichnet, dass**
a) die Mikrohohlglaskugeln eine Schüttdichte gemäß DIN EN 459-2:2010-12, von 0,06 bis 0,1 g/cm³, bevorzugt von 0,07 bis 0,08 g/cm³, aufweisen,
und/oder
b) die Mikrohohlglaskugeln aus Borsilikatglas oder Kalknatronglas (Recyclingglas) bestehen,
und/oder
c) die Mikrohohlglaskugeln einen mittleren Teilchendurchmesser d₅₀ von 45 bis 60 µm, bevorzugt von 50 bis 55 µm, und/oder einen d₉₀-Wert von 70 bis 105 µm, bevorzugt von 75 bis 85 µm, bestimmt jeweils gemäß ISO 13320:2009-10 mittels Lasergranulometrie, aufweisen,
und/oder
d) die Mikrohohlglaskugeln einen maximalen Teilchendurchmesser, bestimmt gemäß ISO 13320:2009-10 mittels Lasergranulometrie, von ≤ 125 µm, bevorzugt ≤ 115 µm, aufweisen.

13. Werkmauermörtel nach einem der vorhergehenden Ansprüche,
**dadurch gekennzeichnet, dass**
die Mikrohohlglaskugeln eine Wärmeleitfähigkeit λ₁₀ₜᵣ gemäß DIN EN 12664:2001-05, von 0,045 bis 0,065 W/(m·K), bevorzugt von 0,05 bis 0,06 W/(m·K), aufweisen.

14. Trockenmörtelformkörper, vorzugsweise Trockenmörtelplatte, aufweisend eine Trockenmischung, die eine mittels eines wasserlöslichen Klebemittels verfestigte Trockenmörtelmischung aufweist,
**dadurch gekennzeichnet, dass**
die Trockenmörtelmischung aus einem Werkmauermörtel gemäß einem der vorhergehenden Ansprüche besteht.

15. Trockenmörtelformkörper nach Anspruch 14,
**dadurch gekennzeichnet, dass**
der Trockenmörtelformkörper eine Trockenmörtelplatte oder ein Trockenmörtelband ist, wobei die Trockenmörtelplatte oder das Trockenmörtelband zumindest eine aus der Trockenmischung bestehende Trockenmörtelschicht aufweist,
wobei vorzugsweise die Trockenmörtelplatte oder das Trockenmörtelband ein Trägerband aufweist, das einseitig oder beidseitig mit zumindest einer aus der Trockenmischung bestehenden Trockenmörtelschicht abgedeckt ist.

16. Trockenmörtelformkörper nach Anspruch 14,
**dadurch gekennzeichnet, dass**
es sich bei dem Trockenmörtelformkörper um ein Trockenmörtelbrikett oder ein Trockenmörtelgranulatkorn, insbesondere ein Trockenmörtelpellet, handelt.

17. Frische oder erhärtete Lagerfugenmörtelschicht (6) eines Mauerwerks (1), vorzugsweise eines Plansteinmauerwerks,
**dadurch gekennzeichnet, dass**
die Lagerfugenmörtelschicht (6) aus einem Werkmauermörtel gemäß einem der Ansprüche 1 bis 13 und Wasser und/oder aus einem oder mehreren Trockenmörtelformkörpern gemäß einem der Ansprüche 14 bis 16 und Wasser hergestellt ist.

18. Lagerfugenmörtelschicht (6) gemäß Anspruch 17,
**dadurch gekennzeichnet, dass**
a) die Lagerfugenmörtelschicht (6) eine, bevorzugt deckelnde, Dünnbettmörtelschicht ist,
und/oder
b) die Lagerfugenmörtelschicht (6) frisch ist und eine folienartige, selbsttragende Konsistenz aufweist,
und/oder
c) die Lagerfugenmörtelschicht (6) frisch ist und eine Frischmörtelrohdichte gemäß DIN EN 1015-6:2007-05 von 0,85 bis 1,25 kg/m³, bevorzugt von 0,9 bis 1,1 kg/m³, aufweist.

19. Mauerwerk (1), vorzugsweise Plansteinmauerwerk, aufweisend mehrere übereinander angeordnete Steinreihen (3) aus jeweils mehreren nebeneinander angeordneten Mauersteinen (2;7), wobei zwischen zwei übereinander angeordneten Steinreihen (3) jeweils eine Lagerfuge (5) vorhanden ist und die übereinander angeordneten Steinreihen (3) mittels einer in der Lagerfuge (5) angeordneten Lagerfugenmörtelschicht (6) miteinander vermörtelt sind,
**dadurch gekennzeichnet, dass**
die Steinreihen (3) mittels einer Lagerfugenmörtelschicht (6) gemäß Anspruch 17 oder 18 miteinander vermörtelt sind,
wobei es sich vorzugsweise bei den Mauersteinen (2) um Lochsteine (7) mit Hochlöchern (8) und/oder um Plansteine, bevorzugt um Planlochsteine, handelt.

20. Verwendung eines Werkmauermörtels gemäß einem der Ansprüche 1 bis 13 und/oder zumindest eines Trockenmörtelformkörpers gemäß einem der Ansprüche 14 bis 16 zur Herstellung einer Lagerfugenmörtelschicht (6), vorzugsweise einer Dünnbettmörtelschicht, eines Mauerwerks (1), vorzugsweise eines Plansteinmauerwerks.

21. Verwendung nach Anspruch 20,
**dadurch gekennzeichnet, dass**
der Werkmauermörtel und/oder der Trockenmörtelformkörper zur Herstellung einer deckelnden Dünnbettmörtelschicht eines Mauerwerks (1) mit Lochsteinen (7) verwendet wird.

22. Verfahren zur Herstellung einer Lagerfugenmörtelschicht (6) eines aus mehreren übereinander angeordneten Steinreihen (3) aus Mauersteinen (2) bestehenden Mauerwerks (1), vorzugsweise eines Plansteinmauerwerks, mit einem Werkmauermörtel gemäß einem der Ansprüche 1 bis 13 mit folgenden Verfahrensschritten:
a) Herstellung eines Frischmörtels aus dem trockenen Werkmauermörtel und Wasser,
b) Auftragen zumindest einer Frischmörtelschicht aus dem Frischmörtel auf eine erste Steinreihe (3) zur Herstellung einer frischen Lagerfugenmörtelschicht,
c) Aufbringen einer weiteren Steinreihe (3) auf die noch nicht erhärtete, frische Lagerfugenmörtelschicht (6),
d) Erhärten lassen des Frischmörtels der Lagerfugenmörtelschicht (6).

23. Verfahren zur Herstellung eines Mauerwerks (1), vorzugsweise eines Plansteinmauerwerks, aufweisend mehrere übereinander angeordnete Steinreihen (3) aus jeweils mehreren nebeneinander angeordneten Mauersteinen (2;7), wobei zwischen zwei übereinander angeordneten Steinreihen (3) jeweils eine Lagerfuge (5) vorhanden ist und die übereinander angeordneten Steinreihen (3) mittels einer in der Lagerfuge (5) angeordneten Lagerfugenmörtelschicht (6) miteinander vermörtelt sind,
**dadurch gekennzeichnet, dass**
die Lagerfugenmörtelschichten (6) gemäß Anspruch 22 hergestellt werden.

## Claims

1. Ready-mixed masonry mortar for producing an, in particular covering, bed joint mortar layer (6) of a masonry (1),
wherein the ready-mixed masonry mortar comprises
a) at least one mineral, in particular hydraulic, binder,
b) 2 to 20 ma.-%, based on the dry mass of the ready-mixed masonry mortar, lightweight aggregate from at least one, preferably mineral, lightweight aggregate material,
c) at least one polysaccharide thickener,
d) at least one mineral thickening agent, and
e) as an additive in addition to the lightweight aggregate, 1 to 4 ma.-%, based on the dry mass of the masonry mortar, micro hollow glass spheres, wherein the micro hollow glass spheres are closed-cell and single-cell,
wherein the masonry mortar comprises at least 2 ma.-% open-cell or at least 2 ma.-% closed-cell lightweight aggregate, based on the dry mass of the ready-mixed masonry mortar.

2. Ready-mixed masonry mortar according to claim 1,
**characterized in that**
the ready-mixed masonry mortar comprises 2 to 15 ma.-%, preferably 2 to 6 ma.-%, of lightweight aggregate, based on the dry mass of the ready-mixed masonry mortar.

3. Ready-mixed masonry mortar according to one of the preceding claims,
**characterized in that**
a) the ready-mixed masonry mortar comprises at least one open-pored lightweight aggregate material,
and/or
b) the ready-mixed masonry mortar comprises exclusively mineral lightweight aggregate material(s).

4. Ready-mixed masonry mortar according to one of the preceding claims,
**characterized in that**
a) the ready-mixed masonry mortar comprises 0.002 to 1.5 ma.-%, preferably 0.003 to 1.0 ma.-%, particularly preferably 0.002 to 0.5 ma.-%, very particularly preferably 0.003 to 0.1 ma.-%, polysaccharide thickening agent, based on the dry mass of the ready-mixed masonry mortar,
and/or
b) the ready-mixed masonry mortar comprises, in particular exclusively, xanthan as a polysaccharide thickening agent, preferably in an amount of 0.002 to 0.5 ma.-%, preferably 0.003 to 0.1 ma.-%, based on the dry mass of the ready-mixed masonry mortar,
and/or
c) the ready-mixed masonry mortar comprises 0.1 to 1.0 ma.-%, preferably 0.3 to 0.7 ma.-%, of mineral thickening agent, based on the dry mass of the ready-mixed masonry mortar,
and/or
d) the mineral thickening agent consists of layered, swellable, preferably activated clay minerals, in particular bentonite and/or hectorite and/or smectite and/or montmorillonite.

5. Ready-mixed masonry mortar according to one of the preceding claims,
**characterized in that**
a) the ready-mixed masonry mortar comprises 75 to 95 ma.-%, preferably 80 to 92 ma.-%, of mineral binder, based on the dry mass of the ready-mixed masonry mortar,
and/or
b) the mineral binder is cement, preferably Portland cement and/or calcium aluminate cement and/or calcium sulfoaluminate cement, and/or hydraulic lime, preferably natural hydraulic lime, and/or hydrated lime and/or a pozzolanic additive.

6. Ready-mixed masonry mortar according to one of the preceding claims, **characterized in that**
a) the ready-mixed masonry mortar comprises expanded perlite and/or expanded vermiculite and/or expanded glass and/or hydrosilicates (foamed water glass) and/or expanded clay and/or porous sands and/or expanded shale and/or pumice and/or tuff and/or polystyrene as lightweight aggregate, preferably expanded perlite and/or expanded vermiculite and/or expanded glass,
and/or
b) the lightweight aggregate of the ready-mixed masonry mortar comprises a grain size ≤ 3 mm, preferably ≤ 2 mm, determined by sieve passage in accordance with DIN EN 1015-1:2007-05,
and/or
c) the lightweight aggregate of the ready-mixed masonry mortar comprises the following grain size distribution, determined using the sieve passage according to DIN EN 1015-1:2007-05 (the individual components add up to 100 ma.-%):
| | **[ma.-%]** | |
|---|---|---|
| **grain sizes** | | **preferably** |
| **≤ 0.09 mm** | 2 - 40 | 3 - 35 |
| **> 0.09-0.2 mm** | 3 - 40 | 4 - 35 |
| **> 0.2 - 0.63 mm** | 20 - 90 | 30 - 90 |
| **> 0.63-1.0 mm** | 0 - 20 | 0 - 15 |
| **> 1.0 mm** | 0 - 10 | 0 - 5 |

7. Ready-mixed masonry mortar according to one of the preceding claims,
**characterized in that**
a) the ready-mixed masonry mortar comprises the following grain size distribution without any fibers that may be present, determined using the sieve passage according to DIN EN 1015-1:2007-05 (the individual components add up to 100 ma.-%):
| | **[ma.-%]** | |
|---|---|---|
| **grain sizes** | | **preferably** |
| **≤ 0.09 mm** | 69.5-96 | 75-96 |
| **> 0.09-0.2 mm** | 1-25 | 1-20 |
| **> 0.2 - 0.63 mm** | 0.5-20 | 0.5-15 |
| **> 0.63 - 1.0 mm** | 0-15 | 0-10 |
| **> 1.0 mm** | 0-10 | 0-5 |
and/or
b) the ready-mixed masonry mortar comprises a bulk density according to DIN EN 459-2:2010-12 of 0.6 to 1.0 kg/dm³, preferably 0.7 to 0.95 kg/dm³.

8. Ready-mixed masonry mortar according to one of the preceding claims,
**characterized in that**
the mass ratio of micro glass hollow spheres to lightweight aggregate is 0.5 to 10, preferably 1 to 8.

9. Ready-mixed masonry mortar according to one of the preceding claims,
**characterized in that**
a) the ready-mixed masonry mortar comprises a mortar compressive strength according to DIN EN 1015-11:2007-05 of 10 to 20 N/mm², preferably 11 to 15 N/mm²,
and/or
b) the ready-mixed masonry mortar comprises a mortar flexural strength according to DIN EN 1015-11:2007-05 of 2.0 to 6.0 N/mm², preferably of 2.0 to 4.2 N/mm²,
and/or
c) the ready-mixed masonry mortar comprises a dry apparent density according to DIN EN 1015-10:2007-05 of 0.5 to 0.95 kg/dm³, preferably of 0.6 to 0.9 kg/dm³,
and/or
d) the ready-mixed masonry mortar comprises a thermal conductivity λ₁₀ₜᵣ according to DIN EN 12664:2001-05 of 0.14 to 0.21 W/(m·K), preferably of 0.15 to 0.20 W/(m·K).

10. Ready-mixed masonry mortar according to one of the preceding claims,
**characterized in that**
the ready-mixed masonry mortar consists of at least 85 ma.-%, preferably of at least 92 ma.-%, particularly preferably of at least 95 ma.-%, based on the dry mass of the ready-mixed masonry mortar, of mineral binder, lightweight aggregate, polysaccharide thickener, mineral thickener, and micro hollow glass spheres.

11. Ready-mixed masonry mortar according to one of the preceding claims,
**characterized in that**
a) the ready-mixed masonry mortar comprises at least one further inert additive in addition to the micro hollow glass spheres, wherein preferably the total amount of further additive(s) is ≤ 15 ma.-%, preferably ≤ 10 ma.-%, particularly preferably ≤ 5 ma.-%, based on the dry mass of the ready-mixed masonry mortar,
and/or
b) the ready-mixed masonry mortar comprises ≤ 10 ma.-%, preferably ≤ 5 ma.-%, particularly preferably ≤ 2 ma.-%, based on the dry mass of the ready-mixed masonry mortar, normal aggregate, preferably no normal aggregate.

12. Ready-mixed masonry mortar according to one of the preceding claims,
**characterized in that**
a) the micro hollow glass spheres comprise a bulk density according to DIN EN 459-2:2010-12 of 0.06 to 0.1 g/cm³, preferably 0.07 to 0.08 g/cm³,
and/or
b) the micro hollow glass spheres consist of borosilicate glass or soda lime glass (recycled glass),
and/or
c) the micro hollow glass spheres comprise an average particle diameter d₅₀ of 45 to 60 µm, preferably 50 to 55 µm, and/or a d₉₀ value of 70 to 105 µm, preferably 75 to 85 µm, determined in each case in accordance with ISO 13320:2009-10 by means of laser granulometry,
and/or
d) the micro hollow glass spheres comprise a maximum particle diameter, determined in accordance with ISO 13320:2009-10 by means of laser granulometry, of ≤ 125 µm, preferably ≤ 115 µm.

13. Ready-mixed masonry mortar according to one of the preceding claims,
**characterized in that**
the micro hollow glass spheres comprise a thermal conductivity λ₁₀ₜᵣ according to DIN EN 12664:2001-05, of 0.045 to 0.065 W/(m·K), preferably of 0.05 to 0.06 W/(m·K).

14. Dry mortar molded body, preferably dry mortar panel, comprising a dry mixture which comprises a dry mortar mixture solidified by means of a water-soluble adhesive,
**characterized in that**
the dry mortar mixture consists of a ready-mixed masonry mortar according to one of the preceding claims.

15. Dry mortar molded body according to claim 14,
**characterized in that**
the dry mortar molded body is a dry mortar panel or a dry mortar strip, wherein the dry mortar panel or the dry mortar strip comprises at least one dry mortar layer consisting of the dry mixture,
wherein the dry mortar panel or dry mortar strip preferably comprises a carrier strip which is covered on one or both sides with at least one dry mortar layer consisting of the dry mixture.

16. Dry mortar molded body according to claim 14,
**characterized in that**
the dry mortar molded body is a dry mortar briquette or a dry mortar granule, in particular a dry mortar pellet.

17. Fresh or hardened bed joint mortar layer (6) of masonry (1), preferably of precision brick masonry,
**characterized in that**
the bed joint mortar layer (6) is made from a ready-mixed masonry mortar according to one of claims 1 to 13 and water and/or from one or more dry mortar molded bodies according to one of claims 14 to 16 and water.

18. Bed joint mortar layer (6) according to claim 17,
**characterized in that**
a) the bed joint mortar layer (6) is a, preferably covering, thin-bed mortar layer,
and/or
b) the bed joint mortar layer (6) is fresh and has a film-like, self-supporting consistency,
and/or
c) the bed joint mortar layer (6) is fresh and comprises a fresh mortar density according to DIN EN 1015-6:2007-05 of 0.85 to 1.25 kg/m³, preferably of 0.9 to 1.1 kg/m³.

19. Masonry (1), preferably precision brick masonry, comprising several rows of bricks (3) arranged one above the other, each comprising several bricks (2;7) arranged side by side, wherein there is a bed joint (5) between each two rows of bricks (3) arranged one above the other, and the rows of bricks (3) arranged one above the other are mortared together by means of a bed joint mortar layer (6) arranged in the bed joint (5),
**characterized in that**
the rows of bricks (3) are mortared together by means of a bed joint mortar layer (6) according to claim 17 or 18,
wherein the bricks (2) are preferably perforated bricks (7) with vertical holes (8) and/or precision bricks, preferably perforated precision bricks.

20. Use of a ready-mixed masonry mortar according to one of claims 1 to 13 and/or at least one dry mortar molded body according to one of claims 14 to 16 for producing a bed joint mortar layer (6), preferably a thin-bed mortar layer, of masonry (1), preferably precision brick masonry.

21. Use according to claim 20,
**characterized in that**
the ready-mixed masonry mortar and/or the dry mortar molded body is used to produce a covering thin-bed mortar layer of a masonry (1) with perforated bricks (7).

22. Method for producing a bed joint mortar layer (6) of masonry (1) consisting of several rows of bricks (3) arranged one above the other, preferably precision brick masonry, with a ready-mixed masonry mortar according to one of claims 1 to 13, comprising the following steps:
a) Production of a fresh mortar from the dry ready-mixed masonry mortar and water,
b) Applying at least one fresh mortar layer from the fresh mortar to a first row of bricks (3) to produce a fresh bed joint mortar layer,
c) Applying a further row of bricks (3) to the fresh bed joint mortar layer (6) that has not yet hardened,
d) Allowing the fresh mortar of the bed joint mortar layer (6) to harden.

23. Method for producing masonry (1), preferably precision brick masonry, comprising several rows of bricks (3) arranged one above the other, each comprising several bricks (2;7) arranged next to one another, wherein there is a bed joint (5) between each two rows of bricks (3) arranged one above the other, and the rows of bricks (3) arranged one above the other are mortared together by means of a bed joint mortar layer (6) arranged in the bed joint (5),
**characterized in that**
the bed joint mortar layers (6) are produced in accordance with claim 22.

## Revendications

1. Mortier de maçonnerie d'usine pour la production d'une couche de mortier de joint d'assise (6), en particulier couvrante, d'une maçonnerie (1), le mortier de maçonnerie d'usine comprenant
a) au moins un liant minéral, en particulier hydraulique,
b) 2 à 20 % en masse d'agrégat léger d'au moins un matériau d'agrégat léger, de préférence minéral,
c) au moins un agent épaississant polysaccharidique,
d) au moins un agent épaississant minéral, et
e) comme additif à coté de l'agrégat léger 1 à 4 % en masse, par rapport à la matière sèche du mortier de maçonnerie, de microsphères de verre creuses, où les microsphères de verre creuses sont formées de manière à cellules fermées et unicellulaires,
où le mortier de maçonnerie d'usine comprend au moins 2 % en masse d'agrégat léger à pores ouverts ou au moins 2 % en masse d'agrégat léger à pores fermés, par rapport à la matière sèche du mortier de maçonnerie.

2. Mortier de maçonnerie d'usine selon la revendication 1,
**caractérisé en ce que**
le mortier de maçonnerie d'usine comprend 2 à 15 % en masse, de préférence 2 à 6 % en masse, d'agrégat léger, par rapport à la matière sèche du mortier de maçonnerie.

3. Mortier de maçonnerie d'usine selon l'une quelconque des revendications précédentes,
**caractérisé en ce que**
a) le mortier de maçonnerie d'usine comprenant au moins un matériau d'agrégat léger à pores ouverts,
et/ou
b) le mortier de maçonnerie d'usine comprend exclusivement un ou des matériaux d'agrégats minéraux légers.

4. Mortier de maçonnerie d'usine selon l'une quelconque des revendications précédentes,
**caractérisé en ce que**
a) le mortier de maçonnerie d'usine comprend de 0,002 à 1,5 % en masse, de préférence de 0,003 à 1,0 % en masse, de manière particulièrement préférée de 0,002 à 0,5 % en masse, de manière tout à fait préférée de 0,003 à 0,1 % en masse, d'agent épaississant polysaccharidique, par rapport à la matière sèche du mortier de maçonnerie,
et/ou
b) le mortier de maçonnerie d'usine comprend, en particulier exclusivement, du xanthane comme agent épaississant polysaccharidique, de préférence en une quantité de 0,002 à 0,5 % en masse, de préférence de 0,003 à 0,1 % en masse, par rapport à la matière sèche du mortier de maçonnerie,
et/ou
c) le mortier de maçonnerie d'usine comprend 0,1 à 1,0 % en masse, de préférence 0,3 à 0,7 % en masse, d'agent épaississant minéral, par rapport à la matière sèche du mortier de maçonnerie,
et/ou
d) l'agent épaississant minéral est constitué de minéraux argileux en forme de couches, gonflables, de préférence activés, et est notamment constitué de bentonite et/ou d'hectorite et/ou de smectite et/ou de montmorillonite.

5. Mortier de maçonnerie d'usine selon l'une quelconque des revendications précédentes,
**caractérisé en ce que**
a) le mortier de maçonnerie d'usine comprend 75 à 95 % en masse, de préférence 80 à 92 % en masse, de liant minéral, par rapport à la matière sèche du mortier de maçonnerie,
et/ou
b) le liant minéral est du ciment, de préférence du ciment Portland et/ou du ciment d'aluminate de calcium et/ou du ciment de sulfoaluminate de calcium, et/ou de la chaux hydraulique, de préférence de la chaux hydraulique naturelle, et/ou de la chaux hydratée et/ou un additif pouzzolanique.

6. Mortier de maçonnerie d'usine selon l'une quelconque des revendications précédentes,
**caractérisé en ce que**
a) le mortier de maçonnerie d'usine comprend comme matériau d'agrégat léger de la perlite expansée et/ou de la vermiculite expansée et/ou du verre expansé et/ou des hydrosilicates (verre à eau expansé) et/ou de l'argile expansée et/ou des sables poreux et/ou des schistes expansés et/ou de la pierre ponce et/ou du tuf et/ou du polystyrène, de préférence de la perlite expansée et/ou de la vermiculite expansée et/ou du verre expansé,
et/ou
b) l'agrégat léger du mortier de maçonnerie d'usine comprend une taille du grain ≤ 3, mm, de préférence ≤ 2 mm, déterminée par le passage au tamis selon DIN EN 1015-1:2007-05,
et/ou
c) l'agrégat léger du mortier de maçonnerie d'usine comprend la distribution de taille du grain suivante, déterminée par le passage au tamis selon DIN EN 1015-1:2007-05 (les différents composants s'additionnent à 100 % en masse) :
| | **[%en masse]** | |
|---|---|---|
| **Tailles du grain** | | **de préférence** |
| **≤ 0,09 mm** | 2 - 40 | 3 - 35 |
| **> 0,09 - 0,2 mm** | 3 - 40 | 4 - 35 |
| **> 0,2 - 0,63 mm** | 20 - 90 | 30 - 90 |
| **> 0,63 - 1,0 mm** | 0 - 20 | 0 - 15 |
| **> 1,0 mm** | 0 - 10 | 0 - 5 |

7. Mortier de maçonnerie d'usine selon l'une quelconque des revendications précédentes,
**caractérisé en ce que**
a) le mortier de maçonnerie d'usine comprend, sans fibres éventuellement présentes, la distribution de taille du grain suivante, déterminée par le passage au tamis selon la norme DIN EN 1015-1:2007-05 (les différents composants s'additionnent à 100 % en masse) :
| | **[% en masse]** | |
|---|---|---|
| **Tailles du grain** | | **de préférence** |
| **≤ 0,09 mm** | 69,5-96 | 75-96 |
| **> 0,09 - 0,2 mm** | 1-25 | 1-20 |
| **> 0,2 - 0,63 mm** | 0,5-20 | 0,5-15 |
| **> 0,63 - 1,0mm** | 0-15 | 0-10 |
| **> 1,0 mm** | 0-10 | 0-5 |
et/ou
b) le mortier de maçonnerie d'usine comprend une densité apparente selon DIN EN 459-2:2010-12 de 0,6 à 1,0 kg/dm³, de préférence de 0,7 à 0,95 kg/dm³.

8. Mortier de maçonnerie d'usine selon l'une quelconque des revendications précédentes,
**caractérisé en ce que**
le rapport en masse microsphères de verre creuses/agrégat léger est de 0,5 à 10, de préférence de 1 à 8.

9. Mortier de maçonnerie d'usine selon l'une quelconque des revendications précédentes,
**caractérisé en ce que**
a) le mortier de maçonnerie d'usine comprend une résistance à la compression du mortier selon DIN EN 1015-11:2007-05 de 10 à 20 N/mm², de préférence de 11 à 15 N/mm²,
et/ou
b) le mortier de maçonnerie d'usine comprend une résistance à la flexion du mortier selon DIN EN 1015-11:2007-05 de 2,0 à 6,0 N/mm², de préférence de 2,0 à 4,2 N/mm²,
et/ou
c) le mortier de maçonnerie d'usine comprend une masse volumique apparente à sec selon DIN EN 1015-10:2007-05 de 0,5 à 0,95 kg/dm³, de préférence de 0,6 à 0,9 kg/dm³,
et/ou
d) le mortier de maçonnerie d'usine comprend une conductivité thermique λ_{10sec} selon DIN EN 12664:2001-05 de 0,14 à 0,21 W/(m·K), de préférence de 0,15 à 0,20 W/(m·K).

10. Mortier de maçonnerie d'usine selon l'une quelconque des revendications précédentes,
**caractérisé en ce que**
le mortier de maçonnerie d'usine est constitué d'au moins 85 % en masse, de préférence d'au moins 92 % masse, de manière particulièrement préférée d'au moins 95 % en masse, par rapport à la matière sèche du mortier de maçonnerie, de liant minéral, d'agrégat léger, d'agent épaississant polysaccharidique, d' agent épaississant minéral et de microsphères de verre creuses.

11. Mortier de maçonnerie d'usine selon l'une quelconque des revendications précédentes,
**caractérisé en ce que**
a) le mortier de maçonnerie d'usine comprend au moins un autre additif inerte en plus des microsphères de verre creuses, où, de préférence, la quantité totale d'autre(s) additif(s) est ≤ 15 % en masse, de préférence ≤ 10 % en masse, de manière particulièrement préférée ≤ 5 % en masse, par rapport à la matière sèche du mortier de maçonnerie, et/ou
b) le mortier de maçonnerie d'usine comprend ≤ 10 % en masse, de préférence ≤ 5 % en masse, de manière particulièrement préférée ≤ 2 % en masse d'agrégat normal, par rapport à la matière sèche du mortier de maçonnerie, de préférence aucun matériau d'agrégat normal.

12. Mortier de maçonnerie d'usine selon l'une quelconque des revendications précédentes,
**caractérisé en ce que**
a) les microsphères de verre creuses comprennent une densité apparente selon la norme DIN EN 459-2:2010-12, de 0,06 à 0,1 g/cm³, de préférence de 0,07 à 0,08 g/cm³,
et/ou
b) les microsphères de verre creuses sont en verre borosilicaté ou en verre sodo-calcique (verre recyclé),
et/ou
c) les microsphères de verre creuses comprennent un diamètre de particule moyen d₅₀ de 45 à 60 µm, de préférence de 50 à 55 µm, et/ou une valeur d₉₀ de 70 à 105 µm, de préférence de 75 à 85 µm, déterminée dans chaque cas selon ISO 13320:2009-10 au moyen de la granulométrie laser,
et/ou
d) les microsphères de verre creuses comprennent un diamètre de particule maximal, déterminé selon ISO 13320:2009-10 par granulométrie laser, de ≤ 125 µm, de préférence de ≤ 115 µm.

13. Mortier de maçonnerie d'usine selon l'une quelconque des revendications précédentes,
**caractérisé en ce que**
les microsphères de verre creuses comprennent une conductivité thermique λ_{10sec} selon DIN EN 12664:2001-05, de 0,045 à 0,065 W/(m·K), de préférence de 0,05 à 0,06 W/(m·K).

14. Corps moulé en mortier sec, de préférence plaque en mortier sec, comprenant un mélange sec qui comprend un mélange de mortier sec solidifié au moyen d'un agent adhésif soluble dans l'eau,
**caractérisé en ce que**
le mélange de mortier sec est constitué d'un mortier de maçonnerie d'usine selon l'une des revendications précédentes.

15. Corps moulés en mortier sec selon la revendication 14,
**caractérisé en ce que**
le corps moulé en mortier sec est une plaque en mortier sec ou une bande en mortier sec, la plaque en mortier sec ou la bande en mortier sec comprenant au moins une couche de mortier sec constituée du mélange sec,
où, de préférence, la plaque en mortier sec ou la bande en mortier sec comprend une bande de support qui est recouverte d'un côté ou des deux côtés d'au moins une couche de mortier sec constituée du mélange sec.

16. Corps moulés en mortier sec selon la revendication 14,
**caractérisé en ce que**
il s'agit, pour le corps moulé en mortier sec, d'une briquette en mortier sec ou d'un grain granulé en mortier sec, en particulier d'une pastille de mortier sec.

17. Couche de mortier de joint d'assise (6) fraîche ou durcie d'une maçonnerie (1), de préférence d'une maçonnerie en pierres plates,
**caractérisé en ce que**
la couche de mortier de joint d'assise (6) est fabriquée d'un mortier de maçonnerie d'usine selon l'une quelconque des revendications 1 à 13 et de l'eau et/ou d'un ou plusieurs corps moulés en mortier sec selon l'une des revendications 14 à 16 et de l'eau.

18. Couche de mortier de joint d'assise (6) selon la revendication 17,
**caractérisé en ce que**
a) la couche de mortier de joint d'assise (6) est une couche de mortier en couche mince, de préférence couvrante,
et/ou
b) la couche de mortier de joint d'assise (6) est fraîche et comprend une consistance autoportante en forme de feuille,
et/ou
c) la couche de mortier de joint d'assise (6) est fraîche et comprend une masse volumique apparente de mortier frais selon DIN EN 1015-6:2007-05 de 0,85 à 1,25 kg/m³, de préférence de 0,9 à 1,1 kg/m³.

19. Maçonnerie (1), de préférence maçonnerie en pierres plates, comprenant plusieurs rangées de pierres (3) disposées les unes au-dessus des autres, constituées chacune de plusieurs pierres de maçonnerie (2;7) disposées les unes à côté des autres, un joint d'assise (5) étant présent entre deux rangées de pierres (3) disposées les unes au-dessus des autres et les rangées de pierres (3) disposées les unes au-dessus des autres étant scellées ensemble au mortier au moyen d'une couche de mortier de joint d'assise (6) disposée dans le joint d'assise (5),
**caractérisé en ce que**
les rangées de pierres (3) sont scellés ensemble au mortier au moyen d'une couche de mortier de joint d'assise (6) selon la revendication 17 ou 18,
où, de préférence, il s'agit pour les pierres de maçonnerie (2) de pierres de maçonnerie à trous (7) avec des trous hauts (8) et/ou de pierres plates, de préférence de pierres plates à trous.

20. Utilisation d'un mortier de maçonnerie d'usine selon l'une quelconque des revendications 1 à 13 et/ou au moins un corps moulé en mortier sec selon l'une quelconque des revendications 14 à 16 pour la fabrication d'une couche de mortier de joint d'assise (6), de préférence d'une couche de mortier en couche mince, d'une maçonnerie (1), de préférence d'une maçonnerie en pierres plates.

21. Utilisation selon la revendication 20,
**caractérisé en ce que**
le mortier de maçonnerie d'usine et/ou le corps moulé en mortier sec est utilisé pour la fabrication d'une couche de mortier en couche mince couvrante d'une maçonnerie (1) avec des pierres de maçonnerie à trous (7).

22. Procédé de fabrication d'une couche de mortier de joint d'assise (6) d'une maçonnerie (1) constituée de plusieurs rangées (3) de pierres de maçonnerie (2) disposées les unes au-dessus des autres, de préférence d'une maçonnerie de pierres plates, avec un mortier de maçonnerie d'usine selon l'une des revendications 1 à 13 avec les étapes de procédé suivantes:
a) Fabrication d'un mortier frais à partir du mortier sec de maçonnerie d'usine et d'eau,
b) Application d'au moins une couche de mortier frais à partir du mortier frais sur une première rangée de pierres (3) pour fabriquer une couche de mortier de joint d'assise frais,
c) Application d'une autre rangée de pierres (3) sur la couche de mortier de joint d'assise frais (6) qui n'a pas encore durcie,
d) Laisser durcir le mortier frais de la couche de mortier de joint d'assise (6).

23. Procédé de fabrication d'une maçonnerie (1), de préférence d'une maçonnerie en pierres plates, comprenant plusieurs rangées de pierres (3) disposées les unes au-dessus des autres, constituées chacune de plusieurs pierres de maçonnerie (2;7) disposées les unes à côté des autres, un joint d'assise (5) étant respectivement présent entre deux rangées de pierres (3) disposées les unes au-dessus des autres et les rangées de pierres (3) disposées les unes au-dessus des autres étant scellées ensemble au mortier au moyen d'une couche de mortier de joint d'assise (6) disposée dans le joint d'assise (5),
**caractérisé en ce que**
les couches de mortier de joint d'assise (6) sont fabriquées selon la revendication 22.
